# FASCICULE DE BREVET EUROPEEN

(11) **EP 3 012 702 B1**
(45) Date de publication et mention de la délivrance du brevet: **12.07.2017**
(21) Numéro de dépôt: 14190074.6
(22) Date de dépôt: 23.10.2014
(51) Int. Cl.: G05B 19/4093

(54) **Procédé de vérification d'un programme de pilotage des organes d'une machine-outil à l'aide d'une commande numérique**
Überprüfungsverfahren eines Programms zur Steuerung der Organe einer Werkzeugmaschine mit Hilfe einer CNC-Steuerung
Method for verifying a program for controlling members of a machine tool via a digital control

(43) Date de publication de la demande: 27.04.2016
(73) Titulaire: Tornos SA, 2740 Moutier (CH)
(72) Inventeur: Neuenschwander, Patrick, 2830 Courrendlin (CH); Berthold, Julien, 2740 Moutier (CH)
(74) Mandataire: BOVARD AG

(56) Documents cités:
- EP-A1- 2 538 295
- DE-A1-102006 029 527
- US-A- 4 586 125
- US-A- 5 091 861

## Description

### Domaine technique de l'invention

La présente invention se rapporte à un procédé de vérification d'un programme de pilotage des organes d'une machine-outil à l'aide d'une commande numérique. Plus spécifiquement, la présente invention se rapporte à un procédé de vérification d'un programme de pilotage des organes d'une machine-outil à l'aide d'une commande numérique qui est édité à l'aide d'un logiciel d'édition et qui est ensuite transféré pour être exécuté sur la commande numérique. De plus, la présente invention se rapporte également à un dispositif pour la mise en oeuvre de ce procédé, ainsi qu'à une commande numérique correspondante.

### Description de l'art antérieur

Les machines-outils modernes, par exemple les décolleteuses, sont généralement pilotées à l'aide d'une commande numérique (ou CN). Des commandes numériques comprennent les éléments qui permettent à contrôler les mouvements des composants mobiles de la machine-outil, notamment des outils et des porte-pièces, mais également le fonctionnement des équipements périphériques, tels que des systèmes d'évacuation des copeaux, des systèmes de ravitaillement, etc. Aujourd'hui, on utilise surtout les commandes numériques par calculateur (ou CNC), donc les commandes numériques qui font appel à un microprocesseur pour exécuter les programmes avec les commandes nécessaires pour piloter la machine-outil.

Les programmes exécutés par une commande numérique CNC sont en règle générale composés des phrases qui décrivent le déroulement complet des opérations de la machine-outil, notamment les opérations géométriques ou les fonctions prédéfinies de la machine-outil. A cette fin, les commandes numériques peuvent être programmées à l'aide de plusieurs « langages de programmation », basés dans la majorité des cas sur la norme internationale ISO 6983 qui a été adoptée au début des années 80.

Effectivement, un programme rédigé selon cette norme contient une suite des instructions explicites qui correspondent à leur tour aux actions et déplacements élémentaires (par exemple une ligne droite ou un arc de cercle) qui permettent de générer des conditions d'usinage ainsi qu'une trajectoire plus ou moins approximée. L'avantage du langage de programmation ISO réside dans une relativement grande simplicité d'utilisation et aussi dans la compatibilité (au moins théorique) des programmes avec un grand nombre des machines-outils de différents producteurs.

Le code ISO est aujourd'hui typiquement édité à l'aide des logiciels spécialement développés qui contiennent souvent une interface graphique permettant à l'utilisateur de la machine-outil de programmer la commande numérique d'une manière simple. Ces logiciels d'édition du code ou programme ISO peuvent être exécutés sur des dispositifs dédiés à cette tâche, par exemple intégrés à la machine-outil, mais il est aussi possible (et aussi plus efficace) d'utiliser des ordinateurs fixes ou portables, y compris les tablettes numériques ou les smartphones (les téléphones intelligents). De cette manière, la programmation peut se faire depuis n'importe quel endroit et le programme peut être transféré sur la machine-outil uniquement au moment de son exécution.

Cependant, un problème majeur lors de l'édition du code ISO réside dans le fait que la vérification de la conformité du résultat de la programmation (donc la géométrie de la pièce qui doit être usinée avec le modèle souhaité) ou la détection des collisions et des erreurs dans l'usinage ne peuvent pas se faire de manière directe. Ainsi, la vérification et/ou le contrôle d'un code édité doivent généralement passer par une étape supplémentaire dans laquelle le code édité est analysé et exécuté manuellement sur la machine-outil, avant de passer à la production. Alternativement, on connait déjà les solutions dans lesquelles la vérification du programme de pilotage et notamment la détection des collisions est réalisée à l'aide des logiciels spécifiques, comprenant en règle générale des simulateurs capables de détecter les collisions et les erreurs dans le programme codé.

Bien entendu, cette étape supplémentaire ralentit de manière significative le processus de programmation et le rend donc moins efficace. Aussi, le fait que les programmes ne peuvent pas être vérifiés avant leur exécution peut résulter en des exécutions erronées qui peuvent aller jusqu'aux dégâts sur les composants de la machine-outil. La solution avec les logiciels de simulation résout une partie de ces problèmes, mais elle requiert également un logiciel spécifique, couteux, et cette simulation de l'exécution du programme ralentie également le processus de programmation. Dans les deux cas, la formation des nouveaux opérateurs est plus complexe puisque ceux-ci ne peuvent pas contrôler l'exactitude de ses programmes dans la phase d'apprentissage. De même, la complexité de programmation implique que les opérateurs des commandes numériques doivent avoir une formation spécifique afin de pouvoir programmer les machines-outils de manière efficace.

Dans le brevet US 4 586 125, il est décrit un système de commande numérique prévu pour piloter les actions d'une machine-outil. Ce système de commande numérique possède un écran dont une partie est destinée à l'affichage d'une séquence d'usinage générée par un programme automatique et où cette séquence peut être représentée sous forme d'un diagramme de Gantt. A l'aide d'un curseur, un opérateur peut déplacer sur l'écran certaines opérations de la séquence d'usinage par rapport à d'autres, afin de réduire le temps d'exécution de cette séquence d'usinage.

L'objet de la présente invention est de surmonter les problèmes mentionnés précédemment des solutions connues et de proposer un nouveau procédé de vérification d'un programme de pilotage des outils d'une machine-outil à l'aide d'une commande numérique, notamment avant son exécution sur la commande numérique. Egalement, l'objet de la présente invention est de proposer un dispositif pour la mise en oeuvre de ce procédé, ainsi qu'une commande numérique correspondante.

### Résumé sommaire de l'invention

La présente invention propose donc une manière simple et efficace pour créer des programmes de pilotage des organes d'une machine-outil à l'aide d'une commande numérique qui sont contrôlés par rapport à leur exactitude et réalisabilité avant l'exécution par la commande numérique.

A cet effet, la présente invention a pour objet un procédé de vérification d'un programme de pilotage des organes d'une machine-outil à l'aide d'une commande numérique selon la revendication 1.

La solution proposée se distingue notamment par le fait que, après la définition d'une suite des mouvements des organes de la machine-outil nécessaires pour l'usinage de la pièce et la génération d'un programme de pilotage comprenant une suite de commandes où chaque commande correspond à un mouvement des organes de la machine-outil défini, les commandes du programme généré sont analysées et les calculs de mouvements des organes de la machine-outil correspondants calculés afin de déterminer la séquence des opérations d'usinage de la pièce. Ensuite, et avant la transmission du programme de pilotage à la commande numérique, cette séquence des opérations d'usinage de la pièce est affichée d'une manière graphique. La particularité de cette solution réside dans le fait que l'analyse des commandes du programme, la réalisation des calculs de mouvements des organes de la machine-outil correspondants et l'affichage de la séquence des opérations d'usinage de la pièce sont réalisés en temps réel et que l'affichage de la séquence des opérations d'usinage de la pièce est réalisé en utilisant un diagramme de Gantt.

De cette manière, l'opérateur de la machine-outil (ou plutôt son programmeur) peut facilement vérifier son programme, notamment les parcours des outils et détecter à l'instant toute collision et toute erreur qui pourrait influencer l'exécution du programme de manière négative, et ceci sans faire appel à des logiciels supplémentaires ou sans devoir lancer une simulation. En effet, vu que les mouvements des organes de la machine-outil sont calculés en temps réel et ensuite affichés de manière instantanée à l'aide d'un diagramme de Gantt, la vérification du programme peut être effectuée quasi en parallèle à la programmation elle-même.

Cet affichage peut notamment se faire à l'aide d'un diagramme de Gantt dans lequel chaque opération dans la séquence des opérations d'usinage est représentée par une barre horizontale ou verticale et dans lequel le chemin critique est également affiché. Il s'agit donc d'une représentation simple, intuitive et permettant une vérification très rapide. Dans les cas des opérations répétitives (notamment lors de la fabrication d'un nombre élevé des pièces identiques), les indications supplémentaires (par exemple des drapeaux) peuvent être utilisées pour illustrer les parties du programme exécutées de manière répétitive.

La présente invention a également pour objet un dispositif agencé pour mettre en oeuvre le procédé décrit ci-dessus selon la revendication 10. Finalement, la présente invention a également pour objet une commande numérique apte à exécuter un programme de pilotage vérifié par le procédé décrit ci-dessus selon la revendication 14.

Les autres modes de réalisation avantageux de la présente invention sont décrits dans les revendications dépendantes.

### Brève description des dessins

La présente invention sera bien comprise à la lecture de la description ci-après faite à titre d'exemple non limitatif en regardant les dessins ci-annexés qui représentent schématiquement :
- figure 1 : l'interface d'interaction avec l'utilisateur d'un dispositif pour l'édition du code ISO selon l'art antérieur ; et
- figure 2 : l'interface correspondante d'un dispositif pour la mise en oeuvre du procédé selon un mode de réalisation de la présente invention.

### Description détaillée des modes de réalisation préférés

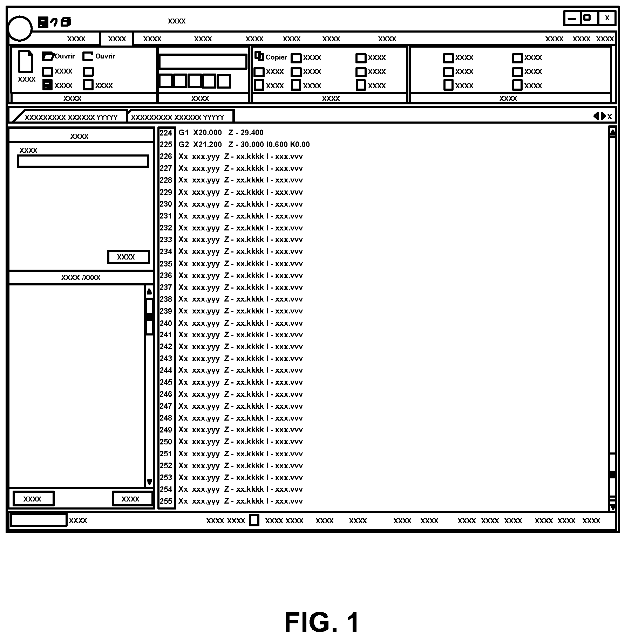

En se reportant à la figure 1, on peut voire une interface d'interaction avec l'utilisateur d'un dispositif d'édition du code ISO connu dans l'art antérieur. Typiquement, il s'agit d'un écran d'un ordinateur, d'une tablette tactile ou même d'un smartphone (téléphone intelligent).

L'interface d'interaction avec l'utilisateur à la figure 1 comprend une partie dans laquelle le programme ISO avec toutes les commandes déjà générées est visible. L'utilisateur du dispositif peut insérer les commandes dans ce programme, effaces les commandes ou effectuer tout autre adaptation du programme. Lorsque le programme est terminé, il peut être transmis sur une commande numérique qui l'exécute afin de piloter les organes d'une machine-outil avec le but d'usiner les pièces. Il s'agit des opérations bien connues dans l'art et une description détaillée de ces opérations sera omise par souci de simplicité.

Comme clairement visible à la figure 1, les éditeurs connus ne permettent pas une vérification facile du programme ISO généré. En effet, le programme ISO doit être exécuté sur une machine-outil afin de détecter les collisions possibles entre les outils ou toute autre erreur qui pourrait influencer de manière négative l'usinage des pièces.

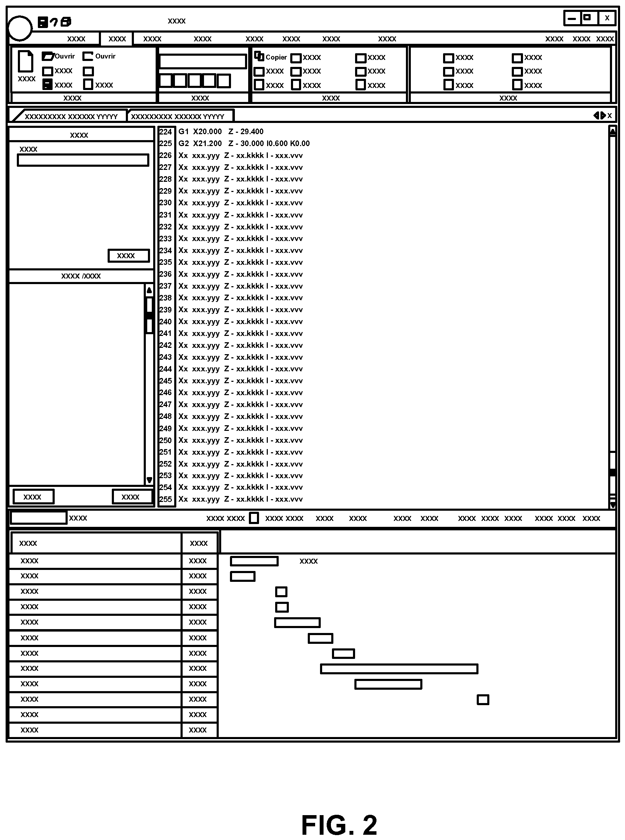

La figure 2 représente de manière schématique l'interface d'un dispositif selon un mode de réalisation de la présente invention, notamment d'un dispositif qui a mis en oeuvre le procédé de vérification du programme de pilotage des organes de la machine-outil selon un mode de réalisation de la présente invention.

Dans le contexte de cette demande, les organes de la machine-outil sont typiquement les outils dont le déplacement est essentiel pour l'usinage de la pièce, mais ce terme comprend également toute autre élément ou tout autre composant de la machine-outil susceptible d'être piloté par la commande numérique. Dans un sens plus large, les organes de la machine-outil dans le sens de la présente demande peuvent également être les organes d'un périphérique tel qu'un évacuateur des copeaux, un ravitailleur de barres pour une décolleteuse, etc. Aussi, même si la présente invention a été spécifiquement conçue pour les programmes rédigés en code selon ISO 6983, il serait aussi possible de l'appliquer dans le contexte de toute autre langage de programmation approprié.

Comme visible à la figure 2, l'interface d'interaction avec l'utilisateur selon ce mode de réalisation de la présente invention comprend également un affichage représentant la séquence des opérations d'usinage de la pièce d'une manière graphique. Dans le cas particulier, il s'agit d'un diagramme de Gantt et dans ce diagramme, chaque opération est représentée comme une barre horizontale.

En effet, lorsque l'utilisateur définit la suite des mouvements des organes de la machine-outil qui sont nécessaires pour l'usinage de la pièce et génère le programme de pilotage dans lequel la suite de commandes correspond à un mouvement des organes de la machine-outil défini, le dispositif à la figure 2 analyse les commandes du programme généré et réalise les calculs de mouvements des organes de la machine-outil correspondants afin de déterminer la séquence des opérations d'usinage de la pièce. Cette analyse et ce calcul des mouvements se font de manière automatique, en parallèle à la génération des commandes dans le programme, donc en temps réel. Cette séquence des opérations d'usinage est ensuite affichée de manière graphique, compréhensible pour l'utilisateur.

De cette manière, l'utilisateur peut automatiquement vérifier le programme de pilotage, et ceci avant de le transmettre sur la commande numérique pour qu'il puisse être exécuté.

Il est important de mentionner que l'affichage de la séquence des opérations d'usinage de la pièce peut notamment comprendre l'affichage du chemin critique, ainsi que l'affichage du temps relatif de chaque opération. Si nécessaire, l'affichage du temps relatif de chaque opération peut être activé uniquement lorsque cet affichage est souhaité par l'utilisateur (p.ex. lorsqu'il pointe sur l'opération souhaitée avec un curseur ou similaire). Aussi, les drapeaux peuvent être utilisés pour identifier les parties du programme qui sont exécutées de manière répétitive (par exemple lors de l'usinage d'un nombre élevé des pièces identiques). Plus concrètement, un drapeau d'une première couleur peut être utilisé pour indiquer le début de la partie répétée, et un drapeau d'une autre couleur pour la fin de la partie répétée.

L'avantage principal de la présente invention par rapport aux solutions déjà connues est également visible à la figure 2 : en effet, l'affichage de la séquence des opérations d'usinage de la pièce est réalisé en parallèle à l'affichage des commandes du programme de pilotage. De cette manière, grâce aux calculs effectués en parallèle, toute modification dans le programme de pilotage est automatiquement visible dans la partie inférieure de l'écran ce qui rend cette vérification du programme beaucoup plus efficace.

Dans ce qui précède, la présente invention a été décrite d'abord en termes généraux et ensuite aussi sous forme d'une explication d'une réalisation pratique. Bien entendu, l'invention n'est aucunement limitée à la description de modes de mise en oeuvre présentés ; il va de soi que de nombreuses variations et modifications peuvent être apportées sans que l'étendue de l'invention qui est définie par le contenu des revendications, ne soit quittée.

## Revendications

1. Un procédé de vérification d'un programme de pilotage des organes d'une machine-outil à l'aide d'une commande numérique pour l'usinage d'une pièce, le procédé comprenant :
la définition d'une suite des mouvements des organes de la machine-outil nécessaires pour l'usinage de la pièce, et la génération d'un programme de pilotage comprenant une suite de commandes, chaque commande correspondant à un mouvement des organes de la machine-outil défini,
l'analyse des commandes du programme généré et la réalisation des calculs de mouvements des organes de la machine-outil correspondants afin de déterminer la séquence des opérations d'usinage de la pièce,
l'affichage de cette séquence des opérations d'usinage de la pièce d'une manière graphique, cet affichage de la séquence des opérations d'usinage de la pièce étant réalisé en utilisant un diagramme de Gantt,
la transmission du programme de pilotage sur la commande numérique, et l'exécution du programme de pilotage par la commande numérique pour l'usinage de la pièce,
**caractérisé en ce que** l'analyse des commandes du programme, la réalisation des calculs de mouvements des organes de la machine-outil correspondants et l'affichage de la séquence des opérations d'usinage de la pièce sont réalisés en temps réel et avant la transmission du programme de pilotage sur la commande numérique.

2. Le procédé selon la revendication 1, dans lequel l'analyse des commandes du programme, la réalisation des calculs de mouvements des organes de la machine-outil correspondants et l'affichage de la séquence des opérations d'usinage de la pièce sont réalisés de manière continue.

3. Le procédé selon la revendication 1 ou 2, dans lequel l'affichage de la séquence des opérations d'usinage de la pièce comprend l'affichage du chemin critique.

4. Le procédé selon l'une quelconque des revendications 1 à 3, dans lequel l'affichage de la séquence des opérations d'usinage de la pièce comprend l'affichage du temps relatif de chaque opération.

5. Le procédé selon l'une quelconque des revendications 1 à 4, dans lequel la suite des opérations exécutées de manière répétitive dans la séquence des opérations d'usinage de la pièce est indiquée dans le diagramme de Gantt par des drapeaux.

6. Le procédé selon la revendication 5, dans lequel le début de la suite des opérations exécutées de manière répétitive est indiqué par un drapeau d'une couleur différente de la couleur du drapeau indiquant la fin de la suite des opérations exécutées de manière répétitive.

7. Le procédé selon l'une quelconque des revendications 1 à 6, dans lequel l'affichage de la séquence des opérations d'usinage de la pièce est réalisé en parallèle à l'affichage des commandes du programme de pilotage.

8. Le procédé selon l'une quelconque des revendications 1 à 7, dans lequel le programme de pilotage est un programme en code ISO 6983.

9. Un dispositif pour la mise en oeuvre du procédé selon l'une quelconque des revendications 1 à 8, comprenant :
un élément de saisie des commandes du programme de pilotage ;
un élément d'analyse des commandes du programme et du calcul de mouvements des organes de la machine-outil afin de déterminer la séquence des opérations d'usinage de la pièce ;
un élément d'affichage de cette séquence des opérations d'usinage de la pièce d'une manière graphique et avant la transmission du programme de pilotage sur la commande numérique.

10. Le dispositif selon la revendication 9, **caractérisé en ce que** l'élément de saisie des commandes est un clavier et l'élément d'affichage de la séquence des opérations d'usinage de la pièce est un écran.

11. Le dispositif selon la revendication 9 ou 10, **caractérisé en ce que** le dispositif est une tablette tactile ou un smartphone.

12. Le dispositif selon l'une quelconque des revendications 9 à 11, **caractérisé en ce que** le dispositif comprend un élément permettant la transmission du programme de pilotage sur la commande numérique sans fil.

13. Une commande numérique apte à exécuter un programme de pilotage des outils d'une machine-outil vérifié à l'aide du procédé selon l'une quelconque des revendications 1 à 8.

14. La commande numérique selon la revendication 13, **caractérisée en ce qu'**elle comprend un élément permettant la réception du programme de pilotage sans fil.

## Patentansprüche

1. Ein Verfahren zur Überprüfung eines Programms zur Steuerung der Elemente einer Werkzeugmaschine, welche eine numerische Steuerung zur Bearbeitung eines Werkstücks verwendet, wobei das Verfahren umfasst:
Definieren einer Abfolge von Bewegungen der Werkzeugmaschinenelemente, welche zur Bearbeitung des Werkstücks erforderlich sind, und Generieren eines Steuerprogramms, welches eine Reihe von Befehlen umfasst, wobei jeder Befehl einer definierten Bewegung der Elemente der Werkzeugmaschine entspricht,
Auswerten der Befehle des generierten Programms und Ausführen der Berechnungen der Bewegungen der korrespondierenden Werkzeugmaschinenelemente, um die Abfolge der Bearbeitungsschritte des Werkstücks zu bestimmen,
Anzeigen der Abfolge der Bearbeitungsschritte des Werkstücks in einer grafischen Weise, wobei die Darstellung der Abfolge der Bearbeitungsschritte des Werkstücks mit Hilfe einer Gantt-Graphik erfolgt,
Übermitteln des Steuerprogramms an die numerische Steuerung, und Ausführen des Steuerprogramms durch die numerische Steuerung für die Bearbeitung des Werkstücks,
**dadurch gekennzeichnet, dass** das Auswerten der Programmbefehle, das Ausführen der Berechnungen der Bewegungen der korrespondierenden Werkzeugmaschinenelemente und das Anzeigen der Abfolge der Bearbeitungsschritte des Werkstücks in Echtzeit und vor dem Übermitteln des Steuerprogramms an die numerische Steuerung ausgeführt werden.

2. Verfahren nach Anspruch 1, wobei das Auswerten der Programmbefehle, das Ausführen der Berechnungen der Bewegungen der korrespondierenden Werkzeugmaschinenelemente, und das Anzeigen der Abfolge der Bearbeitungsschritte des Werkstücks kontinuierlich ausgeführt werden.

3. Verfahren nach Anspruch 1 oder 2, wobei das Anzeigen der Abfolge der Bearbeitungsschritte des Werkstücks das Anzeigen des kritischen Weges umfasst.

4. Verfahren nach einem der Ansprüche 1 bis 3, wobei das Anzeigen der Abfolge der Bearbeitungsschritte des Werkstücks das Anzeigen der relativen Zeit für jeden Bearbeitungsschritt umfasst.

5. Verfahren nach einem der Ansprüche 1 bis 4, wobei die Folge der Bearbeitungsschritte, welche wiederholt in der Abfolge der Bearbeitungsschritte des Werkstücks ausgeführt werden, in der Gantt-Graphik durch Flaggen angezeigt ist.

6. Verfahren nach Anspruch 5, wobei der Beginn der Folge der Bearbeitungsschritte, welche wiederholt ausgeführt werden, mit einer Flagge in einer anderen Farbe bezeichnet ist, als die Farbe der Flagge, welche das Ende der Folge der Bearbeitungsschritte anzeigt, die wiederholt ausgeführt werden.

7. Verfahren nach einem der Ansprüche 1 bis 6, wobei das Anzeigen der Abfolge der Bearbeitungsschritte des Werkstücks parallel zu dem Anzeigen der Befehle des Steuerprogramms erfolgt.

8. Verfahren nach einem der Ansprüche 1 bis 7, wobei das Steuerprogramm ein Programm in ISO 6983 Code ist.

9. Vorrichtung zur Ausführung des Verfahrens nach einem der Ansprüche 1 bis 8, umfassend:
ein Element zum Erfassen der Befehle des Steuerprogramms;
ein Element zum Auswerten der Befehle des Programms und zum Berechnen der Bewegungen der Werkzeugmaschinenelemente, um die Abfolge der Bearbeitungsschritte des Werkstücks zu bestimmen;
ein Element zum Anzeigen der Abfolge der Bearbeitungsschritte des Werkstücks in einer graphischen Weise und vor dem Übermitteln des Steuerprogramms an die numerische Steuerung.

10. Vorrichtung nach Anspruch 9, **dadurch gekennzeichnet, dass** das Element zum Erfassen von Befehlen eine Tastatur ist und das Element zum Anzeigen der Abfolge der Bearbeitungsschritte des Werkstücks ein Bildschirm ist.

11. Vorrichtung nach Anspruch 9 oder 10, **dadurch gekennzeichnet, dass** die Vorrichtung ein Tabletcomputer oder ein Smartphone ist.

12. Vorrichtung nach einem der Ansprüche 9 bis 11, **dadurch gekennzeichnet, dass** die Vorrichtung ein Element umfasst, welches die drahtlose Übertragung des Steuerprogramms an die numerische Steuerung ermöglicht.

13. Numerische Steuerung, welche eingerichtet ist, um ein Steuerprogramm für die Werkzeuge einer Werkzeugmaschine auszuführen, welches durch das Verfahren gemäss einem der Ansprüche 1 bis 8 geprüft ist.

14. Numerische Steuerung nach Anspruch 13, **dadurch gekennzeichnet, dass** ein Element umfasst ist, welches den drahtlosen Empfang des Steuerprogramms ermöglicht.

## Claims

1. A method of verifying a program for controlling the members of a machine tool using a numerical control for machining a workpiece, the method comprising:
defining a sequence of movements of the machine tool members required for the machining of the workpiece, and generating a control program comprising a series of commands, each command corresponding to a defined movement of the members of the machine tool,
analyzing the commands of the generated program and performing the calculations of the movements of the corresponding machine tool members in order to determine the sequence of machining operations of the workpiece,
displaying this sequence of machining operations of the workpiece in a graphical manner, this display of the sequence of the machining operations of the workpiece being achieved using a Gantt chart,
transmitting the control program to the numerical control, and executing the control program by the numerical control for the machining of the workpiece,
**characterized in that** the analyzing of the program commands, the performing of the calculations of movements of the corresponding machine tool members and the displaying the sequence of machining operations of the workpiece are executed in real time, and before the transmission of the control program to the numerical control.

2. The method according to claim 1, wherein the analyzing of the program commands, the performing of the calculations of the movements of the corresponding machine tool members, and the displaying of the sequence of machining operations of the workpiece are carried out in a continuous manner.

3. The method according to claim 1 or 2, wherein the displaying of the sequence of machining operations of the workpiece comprises the displaying of the critical path.

4. The method according to any one of the claims 1 to 3, wherein the displaying of the sequence of machining operations of the workpiece comprises the displaying of the relative time of each operation.

5. The method according to any one of the claims 1 to 4, wherein the succession of operations executed in repetitive manner in the sequence of machining operations of the workpiece is indicated in the Gantt chart by flags.

6. The method according to claim 5, wherein the beginning of the succession of operations executed in repetitive manner is indicated by a flag of a different colour from the colour of the flag indicating the end of the succession of operations executed in repetitive manner.

7. The method according to any one of the claims 1 to 6, wherein the displaying of the sequence of machining operations of the workpiece is executed in parallel to the displaying of the commands of the control program.

8. The method according to any one of the claims 1 to 7, wherein the control program is a program in ISO 6983 code.

9. A device for implementing the method according to any one of the claims 1 to 8, comprising:
an element of capture of the commands of the control program;
an element of analysis of the commands of the program and of calculation of the movements of the machine tool members in order to determine the sequence of machining operations of the workpiece;
an element of display of this sequence of machining operations of the workpiece in a graphical manner and before the transmission of the control program to the numerical control.

10. The device according to claim 9, **characterized in that** the element of capture of commands is a keyboard and the element of display of the sequence of machining operations of the workpiece is a screen.

11. The device according to claim 9 or 10, **characterized in that** the device is a tablet computer or a smartphone.

12. The device according to any one of the claims 9 to 11, **characterized in that** the device comprises an element permitting the wireless transmission of the control program to the numerical control.

13. A numerical control able to execute a program of control of the tools of a machine tool verified with the aid of the method according to any one of the claims 1 to 8.

14. The numerical control according to claim 13, **characterized in that** it comprises an element permitting the wireless reception of the control program.
